# EUROPÄISCHE PATENTSCHRIFT

(11) **EP 0 671 233 B1**
(45) Veröffentlichungstag und Bekanntmachung des Hinweises auf die Patenterteilung: **11.04.2001**
(21) Anmeldenummer: 94810749.5
(22) Anmeldetag: 22.12.1994
(51) Int. Cl.: B23B 51/10, B23B 45/10

(54) **Handbetriebenes Gerät mit einer materialbearbeitenden Spitze**
Hand-driven tool with material processing tip
Outil à main, à pointe coupante

(30) Priorität: 18.01.1994 CH 14194
(43) Veröffentlichungstag der Anmeldung: 13.09.1995
(73) Patentinhaber: Jakob, Werner, CH-8630 Rüti (CH)
(72) Erfinder: Jakob, Werner, CH-8630 Rüti (CH)
(74) Vertreter: Feldmann, Clarence Paul

(56) Entgegenhaltungen:
- CH-A- 299 807
- FR-A- 595 541
- US-A- 3 388 622
- US-A- 4 791 828
- US-A- 4 827 812

## Beschreibung

Die vorliegende Erfindung betrifft ein handbetriebenes Gerät, wie im Oberbegriff des Anspruchs 1 angegeben.

Derartige handbetriebene Geräte werden zum Ausführen von feineren mechanischen Arbeiten wie Ansenken, Entgraten oder Bohren von kleinen Löchern eingesetzt. Sie bestehen aus einem Werkzeughalter, der als Handgriff geformt ist, in den meist verschiedene materialbearbeitende Werkzeuge als Einsätze steckbar sind. Beispiele derartiger Werkzeuge sind Feilen, Ahlen, Bohrer und Senker.
Der Nachteil dieser bekannten handbetriebenen Geräte ist, dass der Handgriff bei einer Rotationsbewegung stets nachgefasst werden muss. Beispielsweise kann ein Bohrloch nicht in einer Bewegung entgratet werden. Dadurch werden die Arbeitsgänge zeitintensiver und auch ungenauer ausgeführt.

Es ist seit langem eine Bohrwinde bekannt, mittels der Löcher von Hand und ohne Umgreifen gebohrt werden können. Dieses Werkzeug weist einen Griff auf, an dem ein u-förmiger Bügel so angeordnet ist, dass er um den Griff drehbar ist. An dem dem Griff entgegengesetzten Ende des Bügels ist ein Bohrer befestigbar, wobei der Bohrer in derselben Achse wie der Griff angeordnet ist. Die Krafteinwirkung durch den Benützer erfolgt hier entlang der Bohrerachse. Zudem muss die Bohrwinde mit beiden Händen bedient werden, oder sie muss einen festen Anschlag aufweisen. Dieses Werkzeug kann lediglich mit einem Bohrer verwendet werden und ist relativ gross. Eine Verwendung des Griffes und des Bügels mit einem anderen materialbearbeitenden Einsatz, beispielsweise einer Feile, ist nicht denkbar. Es ist also mit dieser Lösung nicht möglich, einen Werkzeuggriff zu schaffen, der wie oben beschrieben gemeinsam mit verschiedensten materialbearbeitenden Werkzeugen einsetzbar ist.

CH-A-299 807, das den nächstliegenden Stand der Technik darstellt, offenbart ein Gerät gemäß dem Oberbegriff des Anspruchs 1.

Aus CH-A-299'807 ist ein handbetriebenes Bohrgerät mit einem Schaft bekannt, der drehbar in einer Halbkugel gehalten ist. Der Schaft ist so gebogen, dass drei annähernd parallele Achsen vorhanden sind. Die mit dem Schaft verbundene Bearbeitungsspitze liegt auf einer ersten Achse. Die zweite Achse wird durch einen Schaftabschnitt gebildet, der als Handgriff dient, und die dritte Achse fällt mit der Halbkugel zusammen. Dieses Bohrgerät wird mit einer Hand bedient, indem die Halbkugel in einer Handfläche gehalten wird und der als Handgriff dienende Schaftabschnitt mittels den Fingern gedreht wird, wobei für jede Umdrehung mit den Fingern nachgefasst wird.

Aus der US-A-4 791 828 ist ein Kurbelgriff bekannt in dem ein gekröpfter Schaft radial gelagert und auswechselbar gehalten ist.

Es ist deshalb Aufgabe der vorliegenden Erfindung ein Handwerkzeug der eingangs genannten Art zu schaffen, bei dem ein Nachfassen während eines Arbeitsvorganges entfällt.

Diese Aufgabe löst ein handbetriebenes Gerät mit den Merkmalen des Patentanspruchs 1.

Weitere vorteilhafte Ausgestaltungsformen gehen aus den abhängigen Patentansprüchen hervor und deren Bedeutung ist in der nachfolgenden Beschreibung erläutert.

Der Werkzeughalter ist so geformt, dass er als Handgriff dient, wodurch eine einhändige Bedienung des Gerätes ermöglicht ist. Die Parallelversetzung der Achse des Bearbeitungsdruckes und der Achse der Materialbearbeitung und die drehbare Halterung des Schaftes im Handgriff erlauben eine Rotationsbewegung um mehr als 360° um die Achse der materialbearbeitenden Spitze auszuführen, ohne dass der Handgriff losgelassen und neu gefasst werden muss.

In den Zeichnungen ist ein Ausführungsbeispiel des Erfindungsgegenstandes dargestellt und in der nachfolgenden Beschreibung erläutert. Es zeigt:
- Figur 1: ein handbetriebenes Gerät gemäss der Erfindung;
- Figur 2: eine weitere Ausführungsform des erfindungsgemässen handbetriebenen Gerätes mit einem mehrteiligen Werkzeug;
- Figur 3: ein erfindungsgemässes Werkzeug mit einer materialbearbeitenden Spitze und
- Figur 4: eine weitere Ausführungsform des erfindungsgemässen handbetriebenen Gerätes mit einem mehrteiligen Schaft.

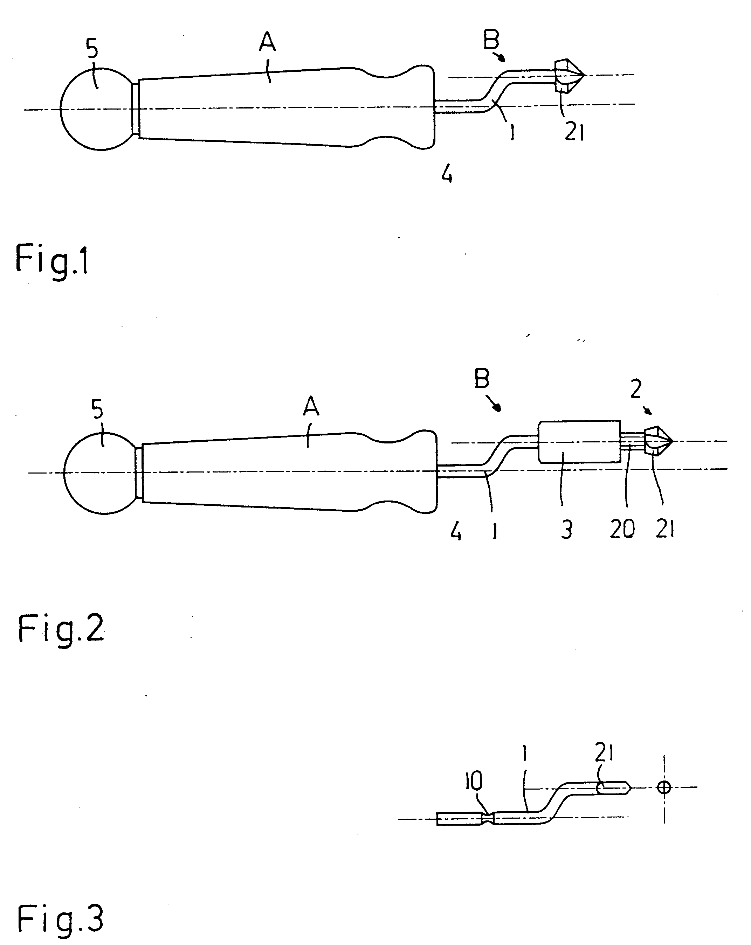

Eine Ausführungsform des erfindungsgemässen handbetriebenen Gerätes ist in Figur 1 dargestellt. Es besteht aus einem Werkzeughalter A und einem Werkzeug B.
Der Werkzeughalter A ist als längsgeformter Handgriff ausgebildet. Er weist eine gerade, vorzugsweise kegelstumpfartige Form auf. Im Werkzeughalter A befindet sich eine Federspannzange 4. Diese Federspannzange 4 dient als Mittel zur lösbaren Verbindung des Werkzeuges B im Werkzeughalter A. Die Betätigung der Federspannzange 4 erfolgt über einen Drehknopf 5, der sich am hinteren Ende des Werkzeughalters A befindet und der die Verlängerung der Federspannzange 4 bildet. Wird der Drehknopf 5 in den Werkzeughalter A hineingestossen, so wird die Feder im Innern des Werkzeughalters A zusammengedrückt und die im Werkzeughalter A zusammengepresste Spannzange 4 wird vorne teilweise aus dem Werkzeughalter A hinausgestossen, so dass sie sich öffnet. Anstelle der Federspannzange 4 kann auch eine Schiebemuffe verwendet werden.

Das Werkzeug B weist einen Schaft 1 und einen Werkzeugkopf 2 mit einer materialbearbeitenden Spitze 21 oder Krone auf. Das Werkzeug kann beispielsweise ein Senker, ein Entgrater oder ein Bohrer sein. Der Schaft 1 ist teilweise in die Federspannzange 4 einführbar und wird von dieser im Werkzeughalter A gehalten. Dabei ist der Schaft bezüglich der Federspannzange 4 und dem Werkzeughalter A drehbar. Hierfür weist der Schaft 1 in seinem hinteren, geraden Bereich eine ringförmige Kerbe 10 auf. Dies ist in Figur 3 ersichtlich, wo ein Werkzeug B ohne Werkzeughalter dargestellt ist. Die Spannzange 4 besitzt in ihrem Innern eine entsprechende Rippe. Dadurch kann der in die Federspannzange 4 rein formschlüssig achsial gehaltene Schaft 1 nicht ohne Oeffnen der Zange aus dem Werkzeughalter A herausgezogen werden.
Der Schaft 1 weist eine Kröpfung, das heisst eine ParallelVersetzung, auf. Dadurch sind zwei mindestens annähernd parallele Achsen vorhanden, wobei eine erste Achse, die Mittelachse des Werkzeuges B, parallel zu einer zweiten Achse, der Mittelachse des als Handgriff dienenden Werkzeughalters A, versetzt ist. Bei Gebrauch des Gerätes wird das Werkzeug B in die zu bearbeitende Bohrung gesteckt. Der Benützer setzt jedoch die Kraft, das heisst den Bearbeitungsdruck, in der Richtung des Werkzeughalters A ein. Dieser Bearbeitungsdruck erfolgt also versetzt zur materialbearbeitenden Spitze, wobei die Versetzung der Distanz der annähernd parallelen Achse entspricht. Dabei hält er das Gerät mit einer Hand, wobei der kugelförmige Drehknopf 5 in der Handfläche liegt und die Finger den Handgriff halten. Als Führung oder Fixpunkt dient die zu bearbeitende Bohrung. Der Handgriff kann nun um die Bohrung herumgedreht werden, wobei sich das Werkzeug B ebenfalls dreht und durch den auf ihn ausgeübten Druck Material abträgt. Das Werkzeug kann nun also gemeinsam mit dem Werkzeughalter A mehrere Umdrehungen ausführen, ohne dass der Benützer den Handgriff neu fassen muss.

Dies wird durch die Kröpfung und die drehbare formschlüssige Lagerung des Schaftes 1 erreicht.

In der in Figur 1 dargestellten Ausführungsform ist der Schaft 1 des Werkzeuges B einstückig ausgeführt, wobei der Werkzeugkopf an den Schaft angeformt ist. Der gekröpfte Schaft 1 geht also in den Werkzeugkopf 2 mit der materialbearbeitenden Spitze 21 über.

In einer weiteren, in Figur 2 dargestellten Ausführungsform weist das Werkzeug B einen zweiteiligen Schaft auf. Der eine Teilschaft ist gekröpft und weist eine Halterung 3 für den Werkzeugkopf auf. Am anderen Teilschaft ist der Werkzeugkopf 2 mit seiner materialbearbeitenden Spitze 21 angeformt. Die Halterung 3 weist einen Innenvielkant, in dieser Ausführungsform ein Innensechskant, auf. Der Teilschaft des Werkzeugkopfes 2 weist einen Aussenvielkant 20, in dieser Ausführungsform ein Aussensechskant, auf. Dieser Aussensechskant 20 bildet mit dem Innensechskant eine lösbare, achsiale Steckverbindung, wobei die Sicherung des Teilschaftes in der Halterung mittels Reibung, einem Magnet oder einer Einrastfeder erfolgen kann. Dank dieser Ausführungsform können verschiedene Werkzeugköpfe mit demselben gekröpften Schaft verwendet werden, was die eigentlichen Werkzeuge erheblich verbilligt.

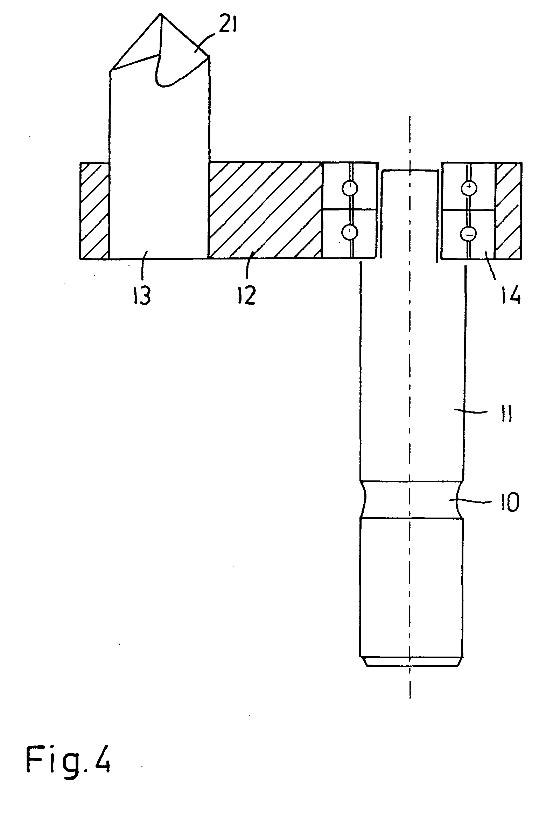

In einer weiteren, in Figur 4 dargestellten Ausführungsform weist das Werkzeug B einen mehrteiligen Schaft auf. Ein erster Teilschaft 11 ist gerade ausgebildet und weist die für die Drehung und die achsiale Fixierung des Werkzeugs B notwendige Kerbe 10 auf. Dieser erste Teilschaft 11 fluchtet also mit der Mittelachse des hier nicht dargestellten Werkzeughalters A. Ein zweiter Teilschaft 12 ist senkrecht zum ersten angeordnet. Es weist an einem Ende ein eingepresstes Kugellager 14 auf. In dieses greift ein oberes Ende des ersten Teilschaftes 11. Am anderen Ende dieses zweiten Teilschaftes 12 ist ein dritter Teilschaft 13 verdrehgesichert und auswechselbar angeordnet, der einstückig in die materialbearbeitende Spitze 21 übergeht. Dieser dritte Teilschaft 13 mit der Spitze liegt wiederum parallel zum ersten Teilschaft 11 und somit zur Mittelachse des Handgriffes, wobei er aber dazu seitlich versetzt ist. Auch dieser Schaft weist somit eine Kröpfung auf.

Mit dem erfindungsgemässen, einhändig bedienbaren Gerät ist es also beispielsweise möglich, Bohrungen ohne Umgreifen oder Neufassen des Handgriffes zu entgraten oder anzusenken. Zudem kann ein einziger Handgriff für verschiedene Werkzeuge eingesetzt werden, wobei der Werkzeugsatz nicht nur aus derartigen mit gekröpftem Schaft zu bestehen hat, sondern es können mit demselben Handgriff oder Werkzeughalter auch noch andere, bekannte Werkzeuge wie Feilen oder Ahlen verwendet werden.

## Patentansprüche

1. Handbetriebenes Gerät, das einen Werkzeughalter (A) und ein Werkzeug (B) mit einer materialbearbeitenden Spitze (21) und einem Schaft (1) aufweist, wobei der Werkzeughalter (A) Mittel zur lösbaren Verbindung mit dem Schaft (1) des Werkzeuges (B) aufweist, dadurch gekennzeichnet, dass der Schaft (1) des Werkzeuges (B) gegenüber dem Werkzeughalter (A) eine Kröpfung aufweist, so dass mindestens annähernd parallele Achsen vorhanden sind, wobei die materialbearbeitende Spitze (21) auf einer ersten Achse liegt,
dass der Werkzeughalter (A) als Handgriff ausgebildet ist, wobei eine zweite Achse des Schaftes im Handgriff so drehbar gehalten ist, dass der auf die materialbearbeitende Spitze (21) ausgeübte Bearbeitungsdruck, welcher über den Werkzeughalter (A) erfolgt, um die Distanz der beiden Achsen versetzt anliegt, so dass das Gerät ohne Umgreifen des Handgriffes bedienbar ist,
und, dass das Mittel zur lösbaren Verbindung eine gefederte Spannzange (4) ist, und der Schaft (1) des Werkzeuges (B) eine Kerbe (10) aufweist, die mit einer in der Spannzange (4) angeordneten Rippe eine achsiale Fixierung des Schaftes (1) bildet, wobei der Schaft (1) innerhalb der Spannzange (4) drehbar ist.

2. Handbetriebenes Gerät nach Anspruch 1, dadurch gekennzeichnet, dass der Werkzeughalter (A) längsgeformt ist.

3. Handbetriebenes Gerät nach Anspruch 1, dadurch gekennzeichnet, dass das Werkzeug (B) ein Senker, ein Entgrater oder ein Bohrer ist.

4. Handbetriebenes Gerät nach Anspruch 1, dadurch gekennzeichnet, dass das Werkzeug (B) einen einstückigen Schaft (1) aufweist.

5. Handbetriebenes Gerät nach Anspruch 1, dadurch gekennzeichnet, dass das Werkzeug (B) einen zweiteiligen Schaft aufweist, wobei an dem einen Teilschaft ein Werkzeugkopf (2) angeformt ist und der andere Teilschaft eine Halterung (3) für den Werkzeugkopf (2) umfasst.

6. Handbetriebenes Gerät nach Anspruch 5, dadurch gekennzeichnet, dass der Teilschaft des Werkzeugkopfes (2) einen Aussenvielkant (20) aufweist, der mit einem Vielkant der Halterung (3) des zweiten Teilschaftes eine lösbare, formschlüssige Steckverbindung bildet.

7. Handbetriebenes Gerät nach Anspruch 1, dadurch gekennzeichnet, dass der Schaft des Werkzeuges (B) aus mehreren Teilschäften besteht, wobei an einem ersten Teilschaft (11), der mit der Mittelachse des Werkzeughalters (A) fluchtet, ein zweiter Teilschaft (12) in einem Kugellager (14) senkrecht dazu angeordnet ist und dass in diesem zweiten Teilschaft (12) parallel, aber seitlich versetzt zur Mittelachse des Werkzeughaltes (A) ein dritter Teilschaft (13) angeordnet ist, der in die materialbearbeitende Spitze (21) übergeht.

8. Handbetriebenes Gerät nach Anspruch 7, dadurch gekennzeichnet, dass die materialbearbeitende Spitze (21) mit dem dritten Teilschaft (13) auswechselbar im zweiten Teilschaft (12) gehalten ist.

## Claims

1. A hand-operated apparatus which comprises a tool holder (A) and a tool (B) with a material-processing tip (21) and with a shank (1), wherein the tool holder (A) comprises means for the releasable connection to the shank (1) of the tool (B), characterised in that the shank (1) of the tool (B) with respect to the tool holder (A) comprises an elbow so that there are present at least approximately parallel axes, wherein the material-processing tip (21) lies on a first axis, that the tool holder (A) is designed as a hand-grip, wherein a second axis of the shank in the hand-grip is rotatably held such that the processing pressure which is exerted on the material-processing tip (21) and which is effected via the tool holder (A) is applied offset by the distance of the two axes so that the apparatus is operable without regripping the hand-grip and that the means for the releasable connection is a sprung tension chuck (4), and the shank (1) of the tool (B) comprises a groove (10) which with a rib arranged in the tension chuck (4) forms an axial fixation of the shank (1), wherein the shank (1) is rotatable within the tension chuck (4).

2. A hand-operated apparatus according to claim 1, characterised in that the tool holder (A) is formed elongate.

3. A hand-operated apparatus according to claim 1, characterised in that the tool (B) is a countersinker, deburrer or a drill.

4. A hand-operated apparatus device according to claim 1, characterised in that the tool (B) comprises a one-piece shank (1).

5. A hand-operated device according to claim 1, characterised in that the tool (B) comprises a two-part shank, wherein on the one part shank there is integrally formed a tool head (2) and the other part shank comprises a mounting (3) for the tool head (2).

6. A hand-operated apparatus according to claim 5, characterised in that the part shank of the tool head (2) comprises an external polygon (20) which with an internal polygon of the mounting (3) of the second part shank forms a releasable positive-fit insert connection.

7. A hand-operated apparatus according to claim 1, characterised in that the shank of the tool (B) consists of several part shanks, wherein on a first part shank (11) which is flush with the middle axis of the tool holder (A) there is arranged perpendicular thereto a second part shank (12) in a ball bearing, and that in this second part shank (12) parallel but laterally offset to the middle axis of the tool holder (A) there is arranged a third part shank (13) which blends into the material-processing tip (21).

8. A hand operated apparatus according to claim 7, characterised in that the material-processing tip (21) with the third part shank (13) is exchangeably held in the second part shank (12).

## Revendications

1. Instrument manuel comprenant un porte-outil (A) et un outil (B) muni d'un fût (1) et d'une pointe (21) travaillant la matière, le porte-outil (A) présentant des moyens en vue de la liaison libérable avec le fût (1) de l'outil (B), caractérisé par le fait que le fût (1) de l'outil (B) accuse un coude par rapport au porte-outil (A), ce qui donne naissance à des axes au moins approximativement parallèles, sachant que la pointe (21) travaillant la matière se trouve sur un premier axe ; par le fait que le porte-outil (A) est réalisé sous la forme d'une poignée, un second axe du fût étant retenu à rotation dans la poignée, de façon telle que la pression d'usinage exercée sur la pointe (21) travaillant la matière, qui est engendrée par l'intermédiaire du porte-outil (A), soit appliquée avec décalage représentant la distance entre les deux axes, si bien que l'instrument peut être actionné sans que la poignée soit ceinturée ; et par le fait que le moyen de liaison libérable est une pince de serrage (4) amortie élastiquement, et le fût (1) de l'outil (B) présente une encoche (10) formant un verrouillage axial dudit fût (1) avec une nervure située dans la pince de serrage (4), ledit fût (1) pouvant tourner à l'intérieur de ladite pince de serrage (4).

2. Instrument manuel selon la revendication 1, caractérisé par le fait que le porte-outil (A) est moulé en une configuration allongée.

3. Instrument manuel selon la revendication 1, caractérisé par le fait que l'outil (B) est une fraise conique, un ébarbeur ou un foret.

4. Instrument manuel selon la revendication 1, caractérisé par le fait que l'outil (B) présente un fût monobloc (1) .

5. Instrument manuel selon la revendication 1, caractérisé par le fait que l'outil (B) présente un fût en deux parties, une tête d'outillage (2) faisant corps avec l'un des fûts partiels, et l'autre fût partiel entourant une pièce de retenue (3) destinée à ladite tête d'outillage (2).

6. Instrument manuel selon la revendication 5, caractérisé par le fait que le fût partiel de la tête d'outillage (2) comporte une configuration (20) à plusieurs pans en relief constituant, avec une configuration à plusieurs pans de la pièce de retenue (3) du deuxième fût partiel, une liaison emboîtable libérable par concordance de formes.

7. Instrument manuel selon la revendication 1, caractérisé par le fait que le fût de l'outil (B) se compose de plusieurs fûts partiels, un deuxième fût partiel (12) étant disposé, dans un roulement à billes (14), perpendiculairement à un premier fût partiel (11) coïncidant avec l'axe médian du porte-outil (A) ; et par le fait qu'un troisième fût partiel (13), fusionnant dans la pointe (21) travaillant la matière, est logé dans ce deuxième fût partiel (12), parallèlement mais avec décalage latéral vis-à-vis de l'axe médian du porte-outil (A).

8. Instrument manuel selon la revendication 7, caractérisé par le fait que la pointe (21) travaillant la matière est retenue de manière interchangeable dans le deuxième fût partiel (12), avec le troisième fût partiel (13).
